# EUROPEAN PATENT SPECIFICATION

(11) **EP 1 205 379 B1**
(45) Date of publication and mention of the grant of the patent: **26.04.2006**
(21) Application number: 01126787.9
(22) Date of filing: 09.11.2001
(51) Int. Cl.: B62J 1/12, B62J 1/00

(54) **Tandem seat arrangement for a vehicle**
Tandemsitzanordnung für Fahrzeuge
Agencement de selle biplace pour véhicules

(30) Priority: 09.11.2000 JP 2000341281
(43) Date of publication of application: 15.05.2002
(60) Divisional application: 05015091.1
(73) Proprietor: YAMAHA HATSUDOKI KABUSHIKI KAISHA, Iwata-shi Shizuoka-ken (JP)
(72) Inventor: Yamada, Kazunori, Iwata-shi, Shizuoka-ken (JP); Kishimoto, Eiji, Iwata-shi, Shizuoka-ken (JP); Takada, Kazuyoshi, Iwata-shi, Shizuoka-ken (JP)
(74) Representative: Grünecker, Kinkeldey, Stockmair & Schwanhäusser Anwaltssozietät

(56) References cited:
- FR-A- 1 115 212
- US-A- 4 563 038
- US-A- 5 713 629

## Description

The present invention relates to a tandem seat arrangement for a vehicle, in particular for a scooter or a motorcycle according to the preamble portion of claim 1.

Tandem seats on which at least two persons can be seated are generally used in large-sized motorcycles of American-type or scooter-type. Those tandem seats can be formed not only the whole seat into one continuous seat but also a relatively large front seat and a relatively small rear seat as separate. In a motorcycle that the bottom of the seat is formed as a storage portion for items such as helmets, a seat is movably located such that the seat can be moved with a cover plate portion being capable of opening and shutting. Furthermore, even in the tandem seat that the front seat and rear seat are separated, its front seat and rear seat are located similar to the integral-type tandem seat such that the seat position is always at a certain position to the motorcycle.

In the motorcycles comprising the conventional tandem seat as described above, because positions of both seats that is formed the whole into continuous one as a matter of course and that is formed the front and rear seat as separate are fixed, a position on which operator and passenger are seated and a space for baggage in the rear side of the seat are depending on a model of the motorcycle, therefore, there is a problem that optimum seat position cannot be achieved when the size and number of passenger and the dimension of baggage placed in the rear side of the seat are changed and when seating preferences (for example, operator and passenger prefer to be seated closely or apart) are different.

One example of an improved tandem seat is shown in FR 1115212.

It is an objective of the present invention to provide an improved tandem seat arrangement as indicated above, wherein seating positions are adaptable to a size and a number of passengers or the dimension of baggage placed in the rear side of the tandem seat.

This objective is solved in an inventive manner by a tandem seat arrangement having the features of claim 1.

Accordingly, there is provided a tandem seat arrangement for a vehicle, in particular for a scooter or a motorcycle, comprising separate front and rear seats supported at a vehicle body by a seat mounting structure, wherein said front and rear seats are adapted to be movable jointly or separately relative to each other with respect to the vehicle body so as to be located at predetermined seating positions.

Consequently, particularly with regard to motorcycles comprising a tandem seat, according to the present invention optimum seat position is achieved even if the size and number of passenger and the dimension of baggage placed in the rear side of the seat are changed and if seating preferences are different.

Further, the front and rear seats are independently supported by a seat-locating structure, wherein the front and rear seats are adapted to slide in a longitudinal direction of the vehicle body and to be positioned in different positions.

Thus, each of the front and rear seats is mounted to be capable of moving independently in longitudinal direction of the body and positioning in predetermined moving position. By means of such a structure, each position of the front and rear seats is changed for accommodating the seat position of operator and passenger, the necessary space for baggage, or the seating preferences, so that optimum seat position can be achieved even if the size and number of passenger and the dimension of baggage are changed and if seating preferences are different.

Further, the seat-locating structure comprises sliding members respectively attached to the front and rear seats and guiding members attached to the vehicle body.

It is preferable if the seat-locating structure comprises a first pair of right and left sliding members fixed to the front seat and a first pair of right and left rail members fixed to a seat mounting portion of the vehicle body and extending to the longitudinal direction of the body, wherein the first pair of right and left sliding members is guided by the first pair of right and left rail members, respectively.

It is further beneficial if the tandem seat arrangement comprises a first positioning member having a plurality of engaging holes, wherein the first positioning member is integrally connected to one of the rail members of the first pair of right and left rail members, and a first engaging member, wherein the first engaging member is selectively engageable or disengageable with any one of the engaging holes of the first positioning member.

According to a further preferred embodiment, the seat-locating structure comprises a second pair of right and left sliding members rotatably connected to the rear seat and a second pair of right and left rail members fixed to a seat mounting portion of the vehicle body and extending to the longitudinal direction of the vehicle body, wherein the second pair of right and left sliding members is guided by the second pair of right and left rail members, respectively.

It is preferable if the pair of right and left sliding members is rotatably connected to the front end portion of the rear set at an axis supporting portion formed on its front end portion.

It is further preferable if the tandem seat arrangement comprises a second positioning member having a plurality of engaging holes, wherein the second positioning member is integrally connected to one of the sliding members of the second pair of right and left sliding members, and a second engaging member, wherein the second engaging member is selectively engageable or disengageable with any one of the engaging holes of the second positioning member.

According to a still further embodiment, there is provided a grab bar, wherein the substantially U-shaped grab bar is mounted on the right and the left side of the tandem seat, and wherein the grab bar is rotatably supported on a shaft provided on the body frame of the vehicle.

It is beneficial if a rotating position of the grab bar is fixed by a positioning gear and an engaging member engageable and disengageable with the positioning gear, wherein the positioning gear is unrotatably fixed to the vehicle body or the positioning gear is integrally formed on an end portion of the grab bar.

In the following, the present invention is explained in greater detail with respect to an embodiment thereof in conjunction with the accompanying drawings, wherein:
- Fig. 1: is a side view showing one example of a motorcycle applying a tandem seat arrangement with a seat-locating structure;
- Fig. 2: is a top view of the motorcycle shown in Fig. 1;
- Fig. 3: is an exploded perspective view showing each member for mounting the front seat of the tandem seat of motorcycle shown in Fig. 1 onto the body side;
- Fig. 4: is an exploded perspective view showing each member for mounting the rear seat of the tandem seat of motorcycle shown in Fig. 1 onto the body side;
- Fig. 5: is a side view respectively showing each specific example of (A), (B) of mechanisms for positioning a grab bar of the motorcycle shown in Fig. 1 at predetermined rotation angles;
- Fig. 6: is a side view respectively showing each example of (A), (B), (C), in which using conditions of a tandem seat and a grab bar of motorcycle shown in Fig. 1 are different; and
- Fig.7: is a side view respectively showing each example of (D), (E), (F), in which using conditions of a tandem seat and a grab bar of motorcycle shown in Fig. 1 are different.

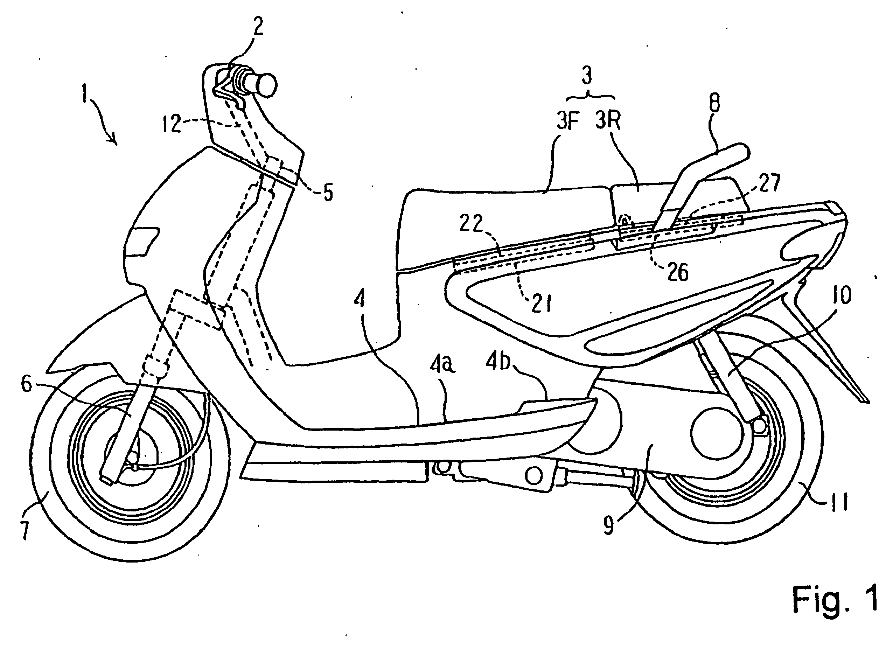

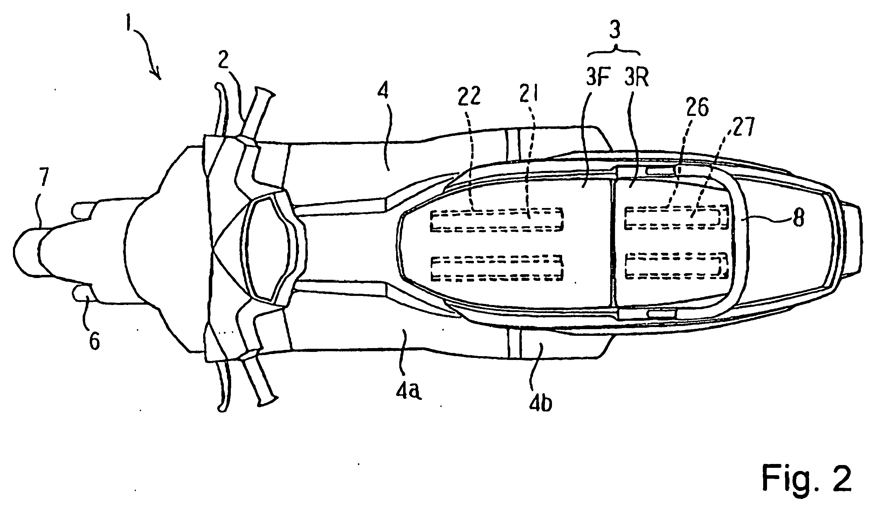

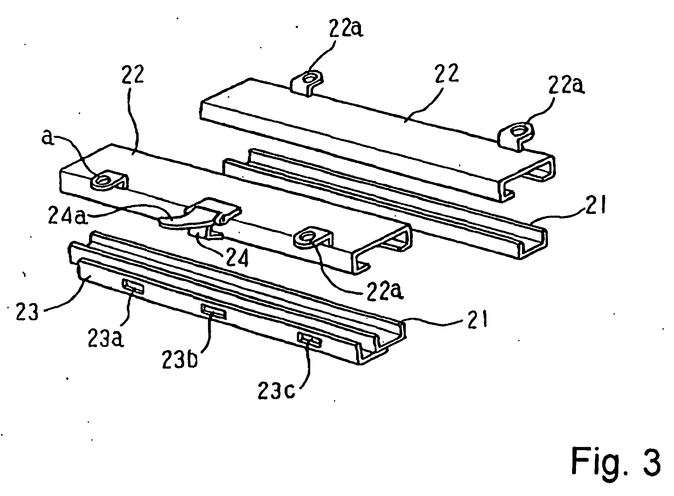

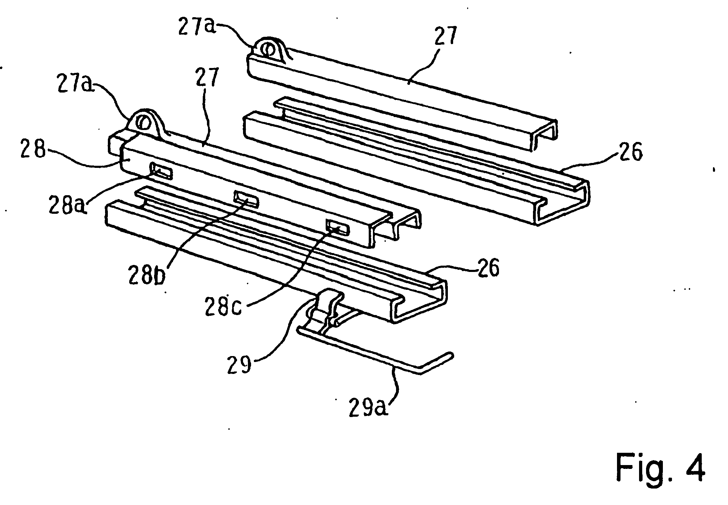

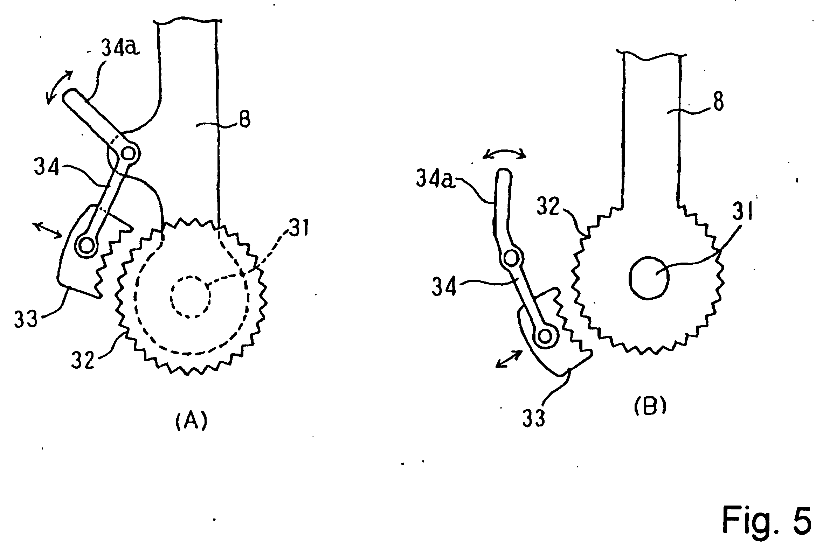

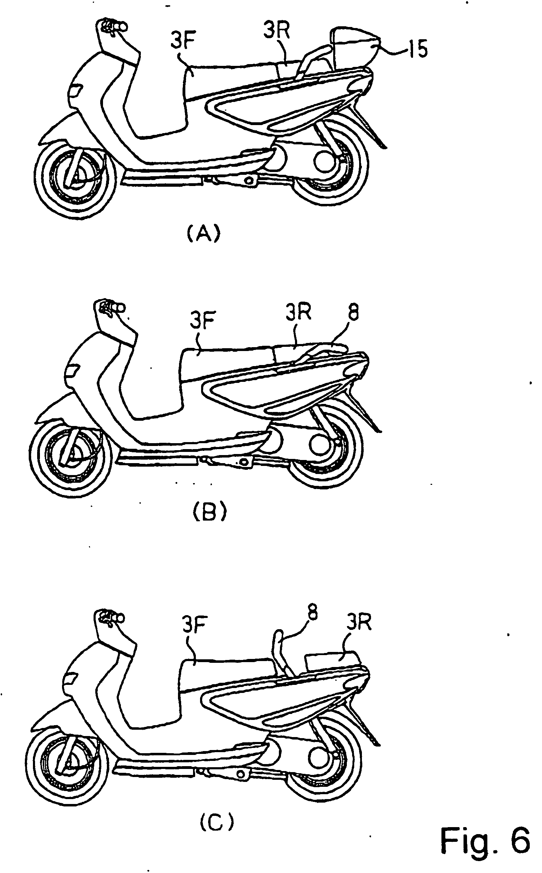

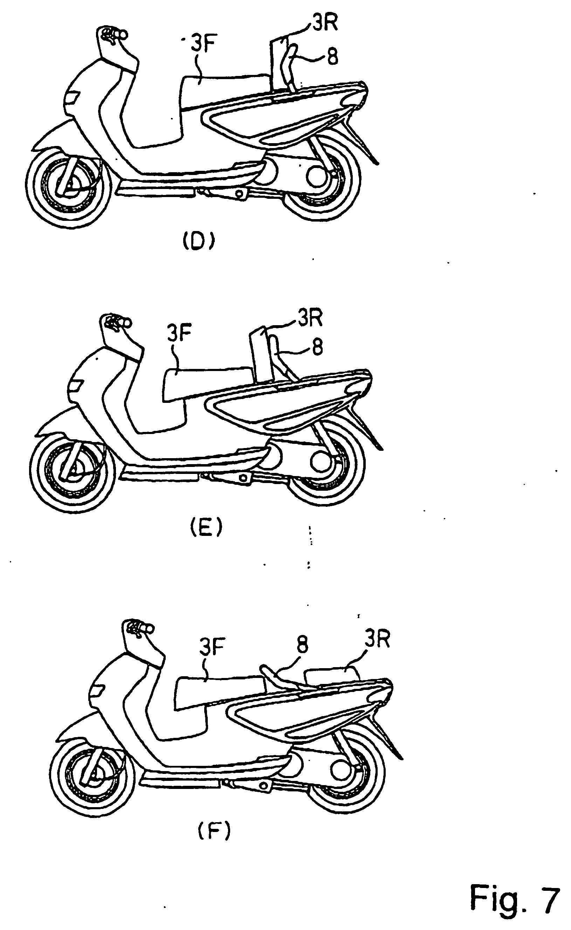

Now, one embodiment of a seat-locating structure of a tandem arrangement for motorcycles will be described with reference to the drawings. Fig. 1 is a side view showing the whole of the motorcycle relating to this embodiment Fig. 2 is a top view showing a state of the motorcycle illustrated in Fig. 1. Fig. 3 shows members of a front seat each mounted on the body. Fig. 4 shows members of a rear seat each mounted on the body. Figs. 5 (A) and (B) show examples of mechanisms for positioning a grab bar at predetermined rotational angles. Figs. 6 (A), (B), and (C) and Figs. 7 (D), (E), and (F) show examples of different using states of a tandem seat and the grab bar in the motorcycle illustrated in Fig. 1.

The motorcycle of this embodiment is as shown in Fig.1, a scooter type motorcycle formed with a low and wide step 4 between a handle 2 and a seat 3, at a front part of a body of the motorcycle 1, a steering portion connected from the handle 2 through a steering shaft 5 to a front fork 6 is rotatably located with the steering shaft 5 as its rotation axis, and a front wheel 7 is rotatably attached to the shaft between bottom ends of the right and left front forks 6.

In the backside of the steering portion, the wide step 4 that both feet can be placed at lower position is formed. In the rear part of the body following the step 4, a relatively large front seat 3F where a driver sits behind the handle 2 and a smaller rear seat 3R where a passenger not operating the motorcycle rides are located as a tandem seat 3 by two separate seats, and an approximate U-shaped grab bar 8 for which the passenger sit on the rear seat 3R grabs during the running or for grabbing to rift the rear part of the body at stopping is located under the condition that its both ends are mounted on the body frame at both right and left sides of the rear seat 3R.

Then, below the tandem seat 3 comprised of the front seat 3F and the rear seat 3R, a power system unit 9 integrated with devices such as an engine, a transmission, and an air cleaner is swingably located on the body frame to serve as a swing arm under the condition that a cushion unit 10 comprised of an hydraulic shock absorber and a coil spring is interposed, and a rear wheel 11 is rotatably attached on the shaft at one side of the rear end of the power system unit 9.

In this motorcycle 1, as shown in Fig. 1, the handle 2 for steering operation, to the steering shaft 5 serving as the rotation axis during operating the front wheel 7 is integrally connected through a connection pipe 12 diagonally extending forward to the upper end portion of the steering shaft 5 to make a large offset in forward of the vehicle in comparison with the rotation axis of the steering shaft 5. In addition, the step 4 formed in the backside of the steering portion is formed as two level floor such that its rear end portion 4b is higher than its front portion 4a and, as shown in Fig. 2, such that width of the step 4 varies between the front portion and the rear portion.

Furthermore, in the motorcycle of scooter type as described above, although the front seat 3F and the rear seat 3R of the tandem seat 3 are mounted on a portion mounting the seat in conventional motorcycles of scooter-type (in other words, the body frame or a member fixed on it, or, in the structure that the lower part of the seat is used as a storage portion for items, a member that one end is rotatably supported on the shaft in the body frame as a lid portion of the storage portion), they are not only just fixedly mounted on such seat mounting portion on the body sides but each also mounted to be capable of moving independently in longitudinal direction of the body and positioning in predetermined moving position.

In addition, in this embodiments, the rear seat 3R of the tandem seat 3 is not only to be capable of repositioning in longitudinal direction of the body as described above but also rotatably mounted its front ends as a center of the rotation. Furthermore, the grab bar 8 mounted on the body frame at both right and left sides of the rear seat 3R is not just fixedly mounted on the body frame but also mounted to be capable of rotating and positioning at predetermined rotational angle.

Specifically, for example about the front seat 3F of the tandem seat 3 as shown in Fig. 3, a pair of right and left rail members 21 extending to the longitudinal direction of the body is fixed to the seat mounting portion of the body, and a pair of right and left sliding members 22 being guided by this rail member 21 to slide in the longitudinal direction of the body is fixed to undersurface side of the front seat 3F by using its mounting portion 22a, and a positioning member 23 provided with plurality of engaging holes 23a, 23b, and 23c along the longitudinal direction of the body is integrally connected to one of the rail members 21, so that an engaging member 24 being capable of selectively engaging and disengaging with any one of the engaging holes 23a, 23b, and 23c of the positioning member 23 is mounted on one of the sliding members 22 corresponding to this one rail member 21 to be capable of arbitrarily moving by means of its operating portion 24a.

Therefore, under the condition of being guided through the sliding member 22 by means of the rail member 21, the front seat 3F can be moved in the longitudinal direction of the body to the seat mounting portion of the body, and the engaging member 24 of the sliding member side 22 is selectively engaged to any one of the engaging holes 23a, 23b, and 23c of the positioning member 23 on the rail member 21 side, and thereby the front seat 3F can be fixed and positioned at predetermined moving position.

In addition, about the rear seat 3R of the tandem seat 3 as shown in Fig. 4, a pair of right and left rail members 26 extending to the longitudinal direction of the body is fixed to the seat mounting portion of the body, and a pair of right and left sliding members 27 being guided by this rail member 26 to slide longitudinal direction to the body side is rotatably connected to the front end portion of the rear seat 3R at an axis supporting portion 27a formed on its front end portion, and a positioning member 28 provided with a plurality of engaging hole 28a, 28b, and 28c along the longitudinal direction of the body is integrally connected to one of a sliding members 27, so that an engaging member 29 being capable of selectively engaging and disengaging with any one of the engaging holes 28a, 28b, and 28c of the positioning member 28 is mounted on one of the rail members 26 corresponding to this one sliding member 27 to be capable of arbitrarily moving by means of its operating portion 29a.

Therefore, under the condition of being guided through the sliding member 27 by means of the rail member 26, the rear seat 3R can be moved in the longitudinal direction of the body to the seat mounting portion of the body, furthermore, the rear seat 3R can be rotated in the longitudinal direction of the body with its front ends as a center of the rotation, and the engaging member 29 on the rail member 26 side is selectively engaged to any one of the engaging holes 28a, 28b, and 28c of the positioning member 28 on the sliding member 27 side, and thereby the rear seat 3R can be fixed and positioned at predetermined moving position.

In addition, about the grab bar 8, in one end of the U-shaped grab bar 8 that both ends are rotatably supported on the shaft in the body side (body frame), as shown in Fig. 5 (A), the positioning gear 32 in other member unrotatably fixed to the body side is disposed on end portion side of the grab bar 8 rotating around an axis 31, and the engaging member 33 being capable of engaging and disengaging with this positioning gear 32 is disposed on one end side of an arm member 34 that the middle portion is supported on the shaft on the side of the grab bar 8, or as shown in Fig. 5 (B), the positioning gear 32 is integrally formed on the end portion of the grab bar 8 rotating around the axis 31, and the engaging member 33 being capable of engaging and disengaging with this positioning gear portion 32 is disposed on one end side of the arm member 34 that the middle portion is supported on the shaft at certain position of the body side.

Therefore, the grab bar 8 is rotated at any angle with the rotation axis 31 as a center of the rotation, the engaging member 33 of one end side of the arm member 34 is then engaged to the positioning gear 32 by operating the handle lever portion 34a of another end side of the arm member 34, and thereby the grab bar 8 rotated at any angle can be fixed and positioned at its rotating position.

As described above, each position of the front seat 3F and the rear seat 3R of the tandem seat 3 can be changed independently, and the rear seat 3R of the tandem seat 3 is rotatable with its front end side as a center of the rotation, so that in the motorcycle 1 of the present embodiment that is capable of changing angles of the grab bar 8, the front seat 3F, the rear seat 3R, and the grab bar 8 can be appropriately changed not only to basic use condition as shown in Fig. 1 but also to each use conditions as respectively shown in Figs. 6 (A), (B), (C) and Figs. 7 (D), (E), (F).

In other words, in basic use condition, as shown in Fig.1, under the condition that the rear seat 3R is continuously located at the backside of the front seat 3F in the normal position, space being capable of placing small baggage is ensured at the back of the rear seat 3R, and as shown in Fig. 6 (A), by locating a small storage box 15 at the back of the rear seat 3R or as shown in Fig. 6 (B), by leaning the grab bar 8 to the back of the rear seat 3R, getting on and off the rear seat 3R can be easily achieved.

As shown in Fig. 6 (C), the rear seat 3R is moved backward and the grab bar 8 is rotated forward to be turned up, and thereby an operator being seated on the front seat 3F and a passenger being seated on the rear seat 3R can separately and easily ride, and the grab bar 8 can be used for both the backrest portion of the operator and the grip portion of the passenger.

In addition, as shown in Fig. 7 (D), under the condition that the rear seat 3R is rotated forward to be turned up and that the grab bar 8 is rotated forward to be turned up such that the rear seat 3R is supported from the back after tum-up, operator and passenger are closely seated on the larger front seat 3F with the rear seat 3R as the backrest portion of passenger, and thereby a space of the back of the rear seat 3R can be enlarged to place baggage at the back of the rear seat 3R.

In addition, as shown in Fig. 7 (E), by moving the front seat 3F forward, moving the rear seat 3R forward, rotating the rear seat 3R forward to be turned up and leaning the grab bar 8 forward largely, to support the rear seat 3R from the back after the tum-up, operator can be seated on the front seat 3F with the rear seat 3R as the backrest portion and can have a seat for a child on the front seat 3F in front of the operator, and a space of the back of the rear seat 3R can be enlarged to place large baggage at the back of the rear seat 3R.

In addition, as shown in Fig. 7 (F), without moving the rear seat 3R from normal position, only the front seat 3F is largely moved forward, and the grab bar 8 is largely rotated forward to lean between the front seat 3F and the rear seat 3R, and thereby operator seated on the front seat 3F can have a seat for a child on the front seat 3F in front of the operator, passenger can be seated on the rear seat 3R, and furthermore small baggage can be placed at the back of the rear seat 3R.

In this embodiment, as shown in Fig. 1, the handle 2 for steering operation is located to make a large offset in forward of the vehicle in comparison with the rotation axis of the steering shaft 5, and thereby even if meters are located at the backside of the handle 2, cover member covering around the handle 2 will not largely project toward the seat 3 side, and hence even if the front seat 3F is moved forward as described above, much narrow space at the front of the seat will not cause a problem.

According to the seat-locating structures for a motorcycle of this embodiments that can be changed its using condition in various ways as described above, by means of changing each positions of the front seat and the rear seat to correspond to the seat position for operator and passenger and the necessary space for placing baggage, even if the size and number of passenger and the dimension of baggage are changed and even if seating preferences are different, optimum seat position corresponding to the above can be achieved always.

The embodiments described above teach a seat-locating structure of motorcycles comprising a tandem seat by means of separated front and rear seats, characterized in that each of the front and rear seats is mounted to be capable of moving independently in longitudinal direction of the body and positioning in predetermined moving position.

It is beneficial if an approximately U-shaped grab bar with both ends mounted on both right and left sides of said tandem seat is mounted to be capable of rotating and positioning at rotating positions.

It is further beneficial if said rear seat of said tandem seat is mounted to be capable of rotating at its front end as a center of the rotation.

According to the seat-locating structure of the motorcycle as described above, by means of independently changing each positions of the front seat and the rear seat of the tandem seat, even if the size and number of passenger and the dimension of baggage are changed and even if seating preferences are different, optimum seat position corresponding to the above can be achieved always.

While the present invention has been described in accordance with one embodiment of a seat-locating structure of the motorcycle, the present invention is not limited in the embodiments described above, for example, this invention is not limited in the motorcycle of scooter-type, but applicable for the motorcycle of American type, in addition, it should be understood that a specific structure for moving and positioning each of the front seat and the rear seat at the predetermined position and a specific structure for positioning the grab bar at any angle can be changed those design property such that those structures can be put into practice by not only the structure shown in the above embodiments but also other proper structures.

And, with regard to a motorcycle with a tandem seat, even if the size and number of passengers and the dimension of baggage placed in the rear seat are changed and even if seating preferences are different, optimum seat position corresponding to the above can be achieved always, as in the motorcycle the tandem seat comprising separate front seat and rear seat, each of front seat and rear seat is mounted through means such as members, and members to be capable of independently moving in longitudinal direction of the body and positioning at predetermined moving position.

## Claims

1. Tandem seat arrangement for a vehicle, in particular for a scooter or a motorcycle, comprising separate front and rear seats (3F,3R) independently supported at a vehicle body by a seat mounting structure, **characterized by** a seat-locating structure comprising sliding members (22,27) respectively attached to the front and rear seats (3F,3R) and comprising guiding members (21,26) attached to the vehicle body, wherein said front and rear seats (3F,3R) are adapted to slide in a longitudinal direction of the vehicle body and to be positioned in differ ent positions so as to be movable jointly or separately relative to each other with respect to the vehicle body and to be located at predetermined seating positions.

2. Tandem seat arrangement according to claim 1, **characterized in that** the seat-locating structure comprises a first pair of right and left sliding members (22) fixed to the front seat (3F) and a first pair of right and left rail members (21) fixed to a seat mounting portion of the vehicle body and extending to the longitudinal direction of the body, wherein the first pair of right and left sliding members (22) is guided by the first pair of right and left rail members (21), respectively.

3. Tandem seat arrangement according to claim 2, **characterized by** a first positioning member (23) having a plurality of engaging holes (23a,23b,23c), wherein the first positioning member (23) is integrally connected to one of the rail members (21) of the first pair of right and left rail members (21), and a first engaging member (24), wherein the first engaging member (24) is selectively engageable or disengageable with any one of the engaging holes (23a,23b,23c) of the first positioning member (23).

4. Tandem seat arrangement according to at least one of the preceding claims 1 to 3, **characterized in that** the seat-locating structure comprises a second pair of right and left sliding members (27) rotatably connected to the rear seat (3R) and a second pair of right and left rail members (26) fixed to a seat mounting portion of the vehicle body and extending to the longitudinal direction of the vehicle body, wherein the second pair of right and left sliding members (27) is guided by the second pair of right and left rail members (26), respectively.

5. Tandem seat arrangement according to claim 4, **characterized in that** the pair of right and left sliding members (27) is rotatably connected to the front end portion of the rear set (3R) at an axis supporting portion (27a) formed on its front end portion.

6. Tandem seat arrangement according to claims 4 or 5, **characterized by** a second positioning member (28) having a plurality of engaging holes (28a,28b,28c), wherein the second positioning member (28) is integrally connected to one of the sliding members (27) of the second pair of right and left sliding members (27), and a second engaging member (29), wherein the second engaging member (29) is selectively engageable or disengageable with any one of the engaging holes (28a,28b,28c) of the second positioning member (29).

7. Tandem seat arrangement according to at least one of the preceding claims 1 to 6, **characterized by** a grab bar (8), wherein the substantially U-shaped grab bar (8) is mounted on the right and the left side of the tandem seat, and wherein the grab bar (8) is rotatably supported on a shaft provided on the body frame of the vehicle.

8. Tandem seat arrangement according to claim 7, **characterized in that** a rotating position of the grab bar (8) is fixed by a positioning gear (32) and an engaging member (33) engageable and disengageable with the positioning gear (32), wherein the positioning gear (32) is unrotatably fixed to the vehicle body or the positioning gear (32) is integrally formed on an end portion of the grab bar (8).

## Revendications

1. Agencement de selle biplace pour un véhicule, en particulier pour un scooter ou une motocyclette, comportant des sièges avant et arrière séparés (3F, 3R) supportés indépendamment sur une carrosserie d'un véhicule par une structure de montage de sièges, **caractérisé par** une structure de positionnement de sièges comportant des éléments coulissant (22, 27) fixés respectivement sur les sièges avant et arrière (3F, 3R), et comportant des éléments de guidage (21, 26) fixés sur la carrosserie du véhicule, dans lequel lesdits sièges avant et arrière (3F, 3R) sont adaptés pour coulisser dans une direction longitudinale de la carrosserie du véhicule, et pour être positionnés dans différentes positions pour être mobiles conjointement ou séparément l'un par rapport à l'autre par rapport à la carrosserie du véhicule, et pour être positionnés dans des positions d'assise prédéterminées.

2. Agencement de selle biplace selon la revendication 1, **caractérisé en ce que** la structure de positionnement de sièges comprend une première paire d'éléments coulissants droit et gauche (22) fixés sur le siège avant (3F), et une première paire d'éléments formant rail droit et gauche (21) fixés sur une partie de montage de siège sur la carrosserie du véhicule, et s'étendant dans la direction longitudinale de la carrosserie, dans lequel les deux éléments coulissants droit et gauche (22) sont guidés par les deux éléments formant rail droit et gauche (21), respectivement.

3. Agencement de selle biplace selon la revendication 2, **caractérisé par** un premier élément de positionnement (23) ayant une pluralité de trous de mise en prise (23a, 23b, 23c), dans lequel le premier élément de positionnement (23) est connecté en un seul bloc à l'un des éléments formant rail (21) de la première paire d'éléments formant rail droit et gauche (21), et un premier élément de mise en prise (24), dans lequel le premier élément de mise en prise (24) peut, de manière sélective, être mis en prise avec l'un quelconque des trous de mise en prise (23a, 23b, 23c) du premier élément de positionnement (23), ou être mis hors de prise d'avec celui-ci.

4. Agencement de selle biplace selon l'une quelconque des revendications 1 à 3, **caractérisé en ce que** la structure de positionnement de sièges comporte une seconde paire d'éléments coulissants droit et gauche (27) connectés de manière rotative au siège arrière (3R), et une seconde paire d'éléments formant rail droit et gauche (26) connectés à une partie de montage de siège de la carrosserie du véhicule, et s'étendant dans la direction longitudinale de la carrosserie du véhicule, dans lequel les deux éléments coulissants droit et gauche (27) sont guidés par les deux éléments formant rail droit et gauche (26), respectivement.

5. Agencement de selle biplace selon la revendication 4, **caractérisé en ce que** les deux éléments coulissants droit et gauche (27) sont connectés de manière rotative sur la partie avant du siège arrière (3R) au niveau d'un axe supportant une partie (27a) formée sur sa partie d'extrémité avant.

6. Agencement de selle biplace selon la revendication 4 ou 5, **caractérisé par** un second élément de positionnement (28) ayant une pluralité de trous de mise en prise (28a, 28b, 28c), dans lequel le second élément de positionnement (28) est connecté en un seul bloc à l'un des éléments coulissants (27) de la seconde paire d'éléments coulissants droit et gauche (27), et un second élément de mise en prise (29), dans lequel le second élément de mise en prise (29) peut, de manière sélective, être mis en prise avec l'un quelconque des trous de mise en prise (28a, 28b, 28c) du second élément de positionnement (29), ou être mis hors de prise d'avec celui-ci.

7. Agencement de selle biplace selon l'une quelconque des revendications 1 à 6, **caractérisé par** une poignée (8), dans lequel ladite poignée (8) sensiblement en forme de U est montée sur les côtés droit et gauche de la selle biplace, et dans lequel la poignée (8) est supportée de manière rotative sur un arbre agencé sur le châssis de carrosserie du véhicule.

8. Agencement de selle biplace selon la revendication 7, **caractérisé en ce qu'**une position de rotation de la poignée (8) est fixée par une roue dentée de positionnement (32) et un élément de mise en prise pouvant être mis en prise avec la roue dentée de positionnement (32), et mise hors de prise d'avec celle-ci, dans lequel la roue dentée de positionnement (32) est fixée de manière non-rotative sur la carrosserie du véhicule, ou la roue dentée de positionnement (32) est formée en un seul bloc sur une partie d'extrémité de la poignée (8).

## Patentansprüche

1. Doppelsitzanordnung für ein Fahrzeug, insbesondere für einen Motorroller oder ein Motorrad, die einen separaten vorderen und hinteren Sitz (3F, 3R) umfasst, die unabhängig voneinander durch eine Sitzanbringungsstruktur an einem Fahrzeugkörper getragen werden, **gekennzeichnet durch** eine Sitzeinstellstruktur, die Gleitelemente (22, 27) umfasst, die an dem vorderen bzw. dem hinteren Sitz (3F, 3R) angebracht sind und Führungselemente (21, 26) umfassen, die an dem Fahrzeugkörper angebracht sind, wobei der vordere und der hintere Sitz (3F, 3R) so eingerichtet sind, dass sie in einer Längsrichtung des Fahrzeugkörpers gleiten und an verschiedenen Positionen so angeordnet werden können, dass sie gemeinsam oder separat zueinander in Bezug auf den Fahrzeugkörper bewegt werden und an vorgegebenen Sitzpositionen eingestellt werden können.

2. Doppelsitzanordnung nach Anspruch 1, **dadurch gekennzeichnet, dass** die Sitzeinstellstruktur ein erstes Paar aus rechtem und linkem Gleitelement (22), die an einem Vordersitz (3F) befestigt sind, und ein erstes Paar aus rechtem und linkem Schienenelement (21) umfasst, die an einem Sitzanbringungsabschnitt des Fahrzeugkörpers befestigt sind und sich in der Längsrichtung des Körpers erstrecken, wobei das erste Paar aus rechtem und linkem Gleitelement (22) durch das erste Paar aus rechtem bzw. linken Gleitelement (21) geführt wird.

3. Doppelsitzanordnung nach Anspruch 2, **gekennzeichnet durch** ein erstes Positionierelement (23), das eine Vielzahl von Eingriffslöchern (23,a, 23b, 23c) hat, wobei das erste Positionierelement (23) integral mit einem der Schienenelemente (21) des ersten Paars aus rechtem und linken Schienenelement (21) verbunden ist, und ein erstes Eingriffselement (24), wobei das erste Eingriffselement (24) selektiv mit einem beliebigen der Eingriffslöcher (23a, 23b, 23c) des ersten Positionierelementes in Eingriff gebracht oder von ihm gelöst werden kann.

4. Doppelsitzanordnung nach wenigstens einem der vorangehenden Ansprüche 1 bis 3, **dadurch gekennzeichnet, dass** die Sitzeinstellstruktur ein zweites Paar aus rechtem und linkem Gleitelement (27), die drehbar mit dem hinteren Sitz (3) verbunden sind, und einem zweiten Paar aus rechtem und linkem Schienenelement (26) umfasst, die an einem Sitzanbringungsabschnitt des Fahrzeugkörpers befestigt sind und sich in der Längsrichtung des Fahrzeugkörpers erstrecken, wobei das zweite Paar aus rechtem und linkem Gleitelement (27) durch das zweite Paar aus rechtem bzw. linkem Schienenelement (26) geführt wird.

5. Doppelsitzanordnung nach Anspruch 4, **dadurch gekennzeichnet, dass** das Paar aus rechtem und linkem Gleitelement (27) mit dem vorderen Endabschnitt des hinteren Sitzes (R3) an einem Achsentrageabschnitt (27a) drehbar verbunden ist, der an seinem vorderen Endabschnitt ausgebildet ist.

6. Doppelsitzanordnung nach Anspruch 4 oder 5, **gekennzeichnet durch** ein zweites Positionierelement (28), das eine Vielzahl von Eingriffslöchem (28a, 28b, 28c) aufweist, wobei das zweite Positionierelement (28) integral mit einem der Gleitelemente (27) des zweiten Paars aus rechtem und linkem Gleitelement (27) verbunden ist, sowie ein zweites Eingriffselement (29), wobei das zweite Eingriffselement (29) selektiv mit einem beliebigen der Eingriffslöcher (28a, 28b, 28c) des zweiten Positionierelementes (29) in Eingriff gebracht oder aus ihm gelöst werden kann.

7. Doppelsitzanordnung nach wenigstens einem der vorangehenden Ansprüche 1 bis 6, **gekennzeichnet durch** eine Haltestange (8), wobei die im Wesentlichen U-förmige Haltestange (8) an der rechten und der linken Seite des Doppelsitzes angebracht ist und die Haltestange (8) drehbar von einer Welle getragen wird, die an dem Körperrahmen des Fahrzeugs vorhanden ist.

8. Doppelsitzanordnung nach Anspruch 7, **dadurch gekennzeichnet, dass** eine Drehposition der Haltestange (8) durch ein Positionierzahnrad (32) und ein Eingriffselement (32) fixiert wird, das mit dem Positionierzahnrad (32) in Eingriff gebracht und von ihm gelöst werden kann, wobei das Positionierzahnrad (32) nicht drehbar an der Fahrzeugkarosserie befestigt ist oder das Positionierzahnrad (32) integral an einem Endabschnitt der Haltestange (8) ausgebildet ist.
